# EUROPEAN PATENT SPECIFICATION

(11) **EP 1 745 898 B1**
(45) Date of publication and mention of the grant of the patent: **03.09.2008**
(21) Application number: 06112516.7
(22) Date of filing: 12.04.2006
(51) Int. Cl.: B01D 53/34, F01N 3/28

(54) **Punching die for manufacturing seal member and method for manufacturing seal member**
Stanzwerkzeug zur Herstellung von Dichtungselementen und Methode zum Herstellen von Dichtelementen
Matrice de poinçonnage pour la fabrication d'un joint d'échantéité et procédé de fabrication d'un joint d'échantéité

(30) Priority: 19.07.2005 JP 2005209137
(43) Date of publication of application: 24.01.2007
(73) Proprietor: IBIDEN CO., LTD., Gifu, Ogaki 503-8604 (JP)
(72) Inventor: Osumi, Shiro c/o IBIDEN CO., LTD. KINUURA PLANT, Takahama Aichi 441-1301 (JP)
(74) Representative: HOFFMANN EITLE

(56) References cited:
- WO-A-99/25964
- US-A- 4 612 006
- US-B1- 6 412 379
- PATENT ABSTRACTS OF JAPAN vol. 2000, no. 17, 5 June 2001 (2001-06-05) & JP 01 115594 A (ISEL CO LTD), 8 May 1989 (1989-05-08)
- PATENT ABSTRACTS OF JAPAN vol. 1995, no. 07, 31 August 1995 (1995-08-31) & JP 07 102961 A (HONDA MOTOR CO LTD), 18 April 1995 (1995-04-18)

## Description

The present invention relates to a punching die used in the manufacture of a seal member that is wound around an exhaust gas purifier, and a method for manufacturing a seal member using a punching die.

In the prior art, an exhaust gas purification apparatus includes a filter member for trapping particulate matter (PM) suspended in the exhaust gas, a casing for accommodating the filter member, and a sheet-like seal member arranged between the filter member and the casing. The seal member is wound around the filter member, and the filter member around which the seal member is wound, is pressed into the casing.

The seal member is required to have the properties described below. First, the seal member must have high heat resistance to withstand high-temperature exhaust gas. Next, the seal member must prevent leakage of exhaust gas from between the filter member and the casing. Further, the seal member must prevent the filter member from falling out of the casing or from moving in the casing.

The seal member may be manufactured by punching out a single seal member from a sheet of inorganic fibers having a predetermined shape in accordance with the size and shape of the filter member. Such a method is known from WO 99/25967. The manufacturing processes for the seal member may include a punching process for cutting a rolled mat of inorganic fibers to a predetermined length. There is a demand for further improving the productivity of seal members.

The present invention is a method of manufacturing seal members from a sheet of an inorganic fiber mat having a contour. The method includes providing a punching die having a first blade supported on a base plate the first blade having a cutting edge extending to form a loop, the punching die also having at least one second blade supported on the base plate at an outer side of the first blade. Wherein the punching die further includes at least one third blade, supported on the base plate at an inner side of the first blade, for punching and separating the seal member formation portion into a plurality of seal members. The method further includes punching the inorganic fiber mat with the punching die by using the first blade and the third blade to punch out a frame-shaped unnecessary portion, which includes the contour of the inorganic fiber mat, and a seal member formation portion, which includes the plurality of seal members, from the inorganic fiber mat, and using the at least one second blade to partially cut the frame-shaped unnecessary portion and form perforations in the frame-shaped unnecessary portion for dividing the unnecessary portion into a plurality of weakly connected unnecessary fragments After punching, transporting the inorganic fiber mat in a state in which the plurality of weakly connected unnecessary fragments surround the seal member formation portion. After punching, transporting the inorganic fiber mat in a state in which the plurality of weakly connected unnecessary fragments surround the seal member formation portion. The method also includes tearing the frame-shaped unnecessary portions into a plurality of unnecessary fragments at the perforations that are formed by the second blade, and removing the unnecessary fragments from the seal member formation portion.

In one embodiment, the at least one second blade has a non-continuous cutting edge including an edgeless portion.

In one embodiment, the edgeless portion is a notch.

In one embodiment, the notch has a width of about one to about eight millimeters.

In one embodiment, the edgeless portion does not cut the frame-shaped unnecessary portion.

In one embodiment, the at least one second blade is one of a plurality of spaced second blades for forming a plurality of perforations in the frame-shaped unnecessary portion.

In one embodiment, the first blade has a cutting edge that extends to form a rectangular frame having four corners, and the at least one second blade includes four second blades respectively extending outward from the four corners of the first blade.

In one embodiment, the second blade and the first blade forms a gap therebetween.

In one embodiment, the second blade and the first blade are spaced from each other by about one to about eight millimeters.

In one embodiment, the at least one second blade includes a plurality of spaced second blades for forming a plurality of perforations in the frame-shaped unnecessary portion.

In one embodiment, the first blade has a cutting edge that extends to form a rectangular frame having four corners, and the at least one second blade includes four second blades respectively arranged near the four corners of the first blade.

In one embodiment, the second blade is arranged inward from the contour of the inorganic fiber mat.

In one embodiment, the inorganic fiber mat includes an inner edge, and the second blade form a perforation connected to the inner edge.

In one embodiment, the at least one second blade includes a plurality of spaced second blades for forming a plurality of perforations in the frame-shaped unnecessary portion.

In one embodiment, the first blade has a cutting edge that extends to form a rectangular frame having four corners, and the at least one second blade includes four second blades respectively arranged near the four corners of the first blade.

In one embodiment, each blade is made of carbon steel.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1A is a plan view showing a punching die according to a preferred embodiment of the present invention;
Fig. 1B is an enlarged view showing a corner of the punching die of Fig. 1A;
Fig. 1C is a partial cross-sectional view of the punching die shown in Fig. 1C taken along line 1C-1C;
Fig. 2 is a partial cross-sectional view of the punching die shown in Fig. 1C taken along line 2-2 of Fig. 1A;
Figs. 3A and 3B are cross-sectional views showing how an inorganic fiber mat is punched with the punching die of Fig. 1A;
Fig. 4 is a plan view showing seal members and unnecessary fragments that are punched out with the punching die of Fig. 1A;
Fig. 5A is a perspective view showing a seal member;
Fig. 5B is a perspective view showing a seal member that is wound around an exhaust gas purifier and a casing for accommodating the exhaust gas purifier;
Fig. 6 is a cross-sectional view of an exhaust gas purification apparatus;
Fig. 7A is a plan view showing a first modification of a punching die according to the present invention;
Fig. 7B is a partially enlarged view showing the punching die of Fig. 7A;
Fig. 8 is a plan view showing seal members and unnecessary fragments that are punched out using the punching die of Fig. 7A:
Fig. 9A is a plan view showing a second modification of a punching die according to the present invention;
Fig. 9B is a partial cross-sectional view taken along line 9B-9B of Fig. 9A;
Fig. 10A is a plan view showing a third modification of a punching die according to the present invention;
Fig. 10B is a partial cross-sectional view taken along line 10B-10B of Fig. 10A.

A punching die 11 used according to the present invention will now be described.

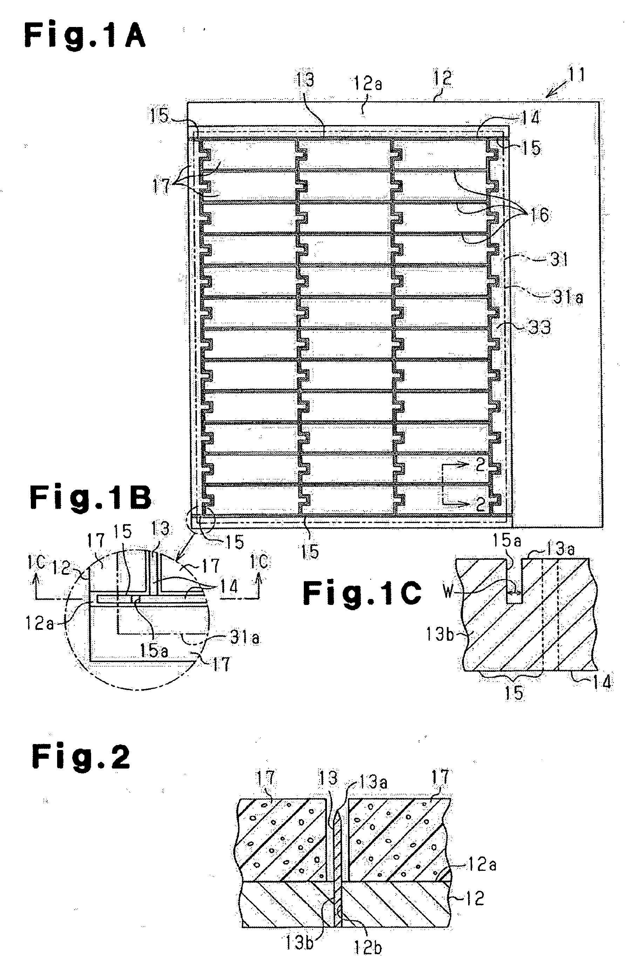

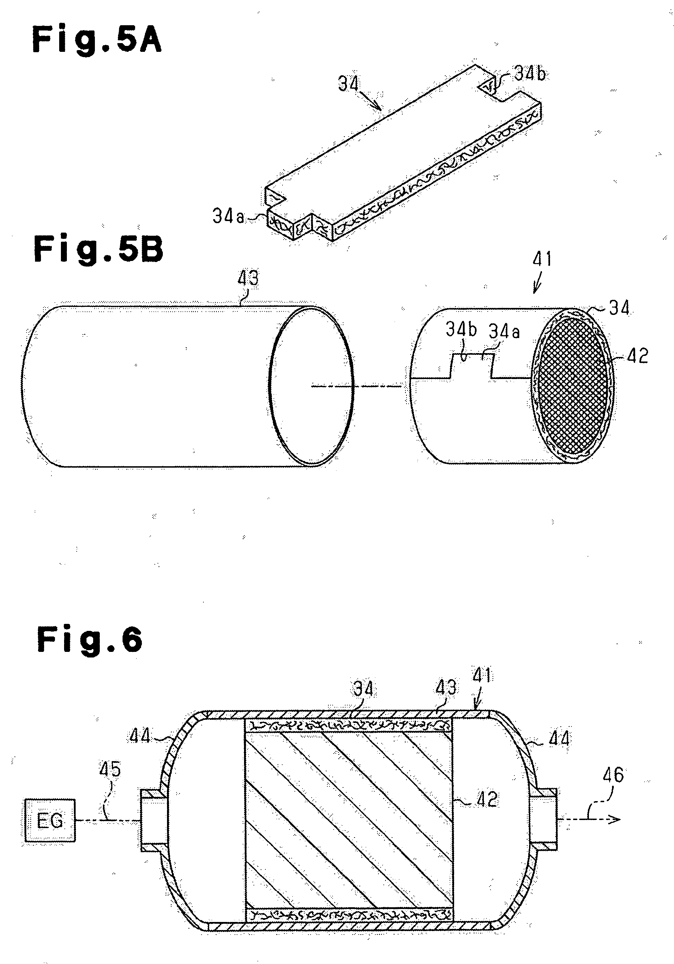

As shown in Fig. 1A, the punching die 11 includes a base plate 12 and a plurality of blades 13 that are supported on the base plate 12. The punching die 11 is used to punch a sheet of an inorganic fiber mat 31 and cut out a seal member 34 from the inorganic fiber mat 31. The seal member 34 is wound around a filter member 42, which functions as an exhaust gas purifier (Fig. 5B). The punching die 11 of the preferred embodiment punches out a plurality of seal members 34 from the inorganic fiber mat 31.

The base plate 12 has a flat processing surface 12a. The processing surface 12a is rectangular and is larger than the inorganic fiber mat 31, which is rectangular. The base plate 12 may be made of any material but is preferably made of wood or plywood, which are easy to manufacture and have relatively high strengths.

The blades 13 include a first blade 14, at least one second blade 15, and at least one third blade 16. The first blade 14 has a cutting edge that projects from the processing surface 12a of the base plate 12 and extends in a loop or a rectangular circuit. The second blades 15 are arranged on the processing surface 12a at the outer side the first blade 14. The third blades 16 are arranged on the processing surface 12a at the inner side the first blade 14.

The cutting edge of the first blade 14 extends in the shape of a rectangular loop. The first blade 14 punches the inorganic fiber mat 31 to separate a frame-shaped unnecessary portion 33, which is the part of the inorganic fiber mat 31 including an outer end (contour) 31a, and a seal member formation portion 32, which is the part of the inorganic fiber mat 31 excluding the frame-shaped unnecessary portion 33. The punching with the first blade 14 forms the end surfaces of the seal member formation portion 32 and shapes the seal member formation portion 32.

The second blades 15 are continuously connected to the first blade 14 so that there is no gap between the second blades 15 and the first blade 14. Further, as shown in Fig. 1C, the second blades 15 each include a notch 15a. The notch 15a defines a non-continuous cutting edge 13a, which includes an edgeless portion that does not have any edge, and separates the second blades 15 from the first blade 14. The non-continuous cutting edge 13a of each second blade 15 forms a perforation in the frame-shaped unnecessary portion 33. The perforation includes an uncut connection part for weakly connecting the unnecessary fragments 33a of the unnecessary portion 33 to one another. The notches 15a of the second blades 15 do not cut the corresponding parts of the unnecessary portion 33.

Referring to Fig. 1B, it is preferred that the width W of the notch 15a be about one to about eight millimeters. This width range provides sufficient strength for maintaining the shape of the frame-shaped unnecessary portion 33, while forming uncut connection portions that weakly connect the unnecessary fragments 33a. The notches 15a have substantially the same width W. The second blades 15, which are spaced from one another, respectively extend outward from the four corners of the first blade 14. The first blade 14 separates the frame-shaped unnecessary portion 33 and the seal member formation portion 32. The seal member formation portion 32 is substantially rectangular and is surrounded by the frame-shaped unnecessary portion 33. The four second blades 15 forms at four corners of the frame-shaped unnecessary portion 33 four perforations that dividably connect four thin and elongated unnecessary fragments 33a.

The third blades 16 are arranged at the inner side of the first blade 14. The third blades 16 punch the seal member formation portion 32 and divide the seal member formation portion 32 into a plurality of seal members 34. In the preferred embodiment, the plurality of third blades 16 are arranged in a grid. With such third blades 16, a single punching operation enables the plurality of seal members 34 to be cut out of the single inorganic fiber mat 31.

As shown in Fig. 2, the base plate 12 includes mounting grooves 12b. The mounting grooves 12b are formed in the processing surface 12a, for example, through laser processing. Basal portions 13b of the blades 13 (14, 15, and 16) are pressed into the mounting grooves 12b so that the cutting edges 13a of the blades 13 project from the processing surface 12a. The blades 13 are supported on the base plate 12 in this manner. The cutting edges 13a of the blades 13 are aligned at a predetermined height from the processing surface 12a.

The blades 13 are fixed to the base plate 12 in a predetermined arrangement. Each blade 13 may be formed by bending a single thin and elongated blade in a predetermined manner and fixing the blade to the base plate 12. Alternatively, the blades 13 may be formed by arranging a plurality of blade pieces adjacent to one another in a continuous manner and fixing the blade pieces to the base plate 12. The blades 13 may be formed, for example, from a metal material or a ceramic material. In the preferred embodiment, the blades 13 are made of carbon steel, which easily bends. Each blade 13 may be single edged or double edged. In the example of Fig. 2, the blade 13 is double edged. It is preferable that the blade 13 be double edged to reduce resistance when punching the inorganic fiber mat 31. Although not limited, the blade 13 has a thickness in the range of about 0.5 to about 1.5 mm. In the preferred embodiment, the blade 13 has a thickness of approximately 1 mm.

As shown in Figs. 1 and 2, a foam layer 17 is fixed on the processing surface 12a in an area defined by the first blade 14 and the third blades 16 and an area outside the first blade 14.

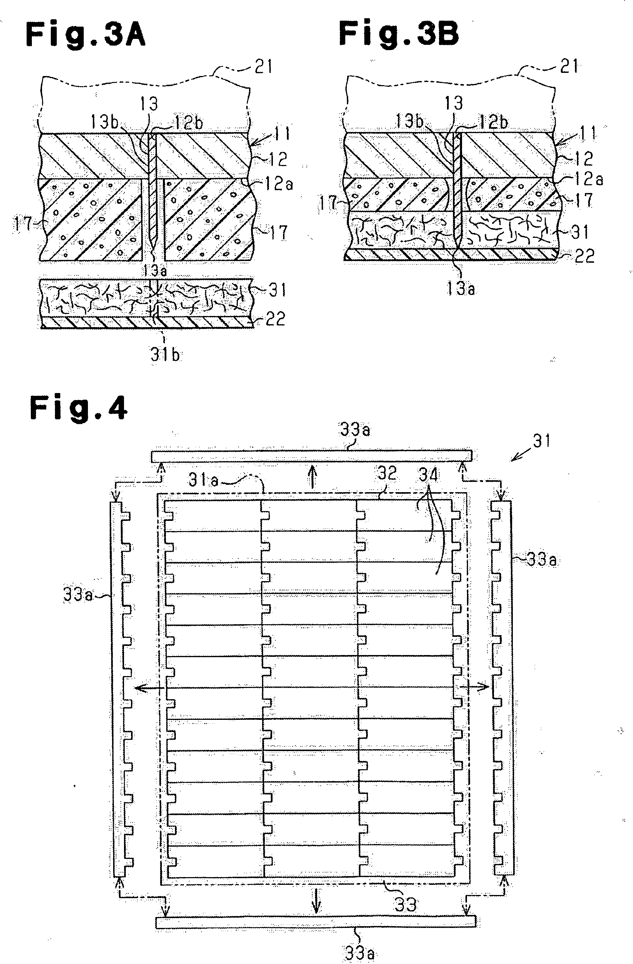

The operation of the foam layer 17 will now be described. As shown in Fig. 3A, the punching die 11 is set in a press 21 with the processing surface 12a facing downwards. The inorganic fiber mat 31 is placed on a conveyer or a processing plate 22 arranged below the punching die 11. When the press 21 is driven, the blades 13 penetrate the surface of the inorganic fiber mat 31 at a right angle and are moved downward until their cutting edges come into contact with the processing plate 22. As a result, the blades 13 cut the inorganic fiber mat 31. Referring to Fig. 3B, the pressure applied by the press 21 compresses and elastically deforms the foam layer 17. The repulsive force of the foam layer 17 acts on the inorganic fiber mat 31. When the press 21 moves upward, the repulsive force of the foam layer 17 downwardly presses the inorganic fiber mat 31. As a result, the cutting edges 13a are removed from the punched inorganic fiber mat 31. Fig. 3A shows a cut surface 31b of the punched inorganic fiber mat 31. The foam layer 17 separates the punched inorganic fiber mat 31 from the punching die 11. In this state, the punched inorganic fiber mat 31 is conveyed to a workbench.

It is preferable that a gap be formed between the foam layer 17 and the blades 13. The gap reduces friction resistance between the inorganic fiber mat 31 and the blades 13 when the foam layer 17 presses the inorganic fiber mat 31. It is preferable that the gap between the foam layer 17 and the blades 13 be about 10 mm or less. When the gap is about 10 mm or less, the inorganic fiber mat 31 does not get caught between the foam layer 17 and the blades 13. This prevents deformed seal members from being manufactured.

The foam layer 17 is manufactured from an elastic material that produces sufficient repulsive force for removing the cutting edges 13a from the inorganic fiber mat 31. The preferred material for the foam layer 17 is synthetic rubber since this material maintains repulsive force (the foam layer 17 does not become flat) even after repetitive use of the punching die 11.

Referring to Fig. 3A, in a state in which the foam layer 17 is not compressed, it is preferred that the thickness of the foam layer 17 be greater than the height of the cutting edges 13a from the processing surface 12a. In this case, the foam layer 17 presses the inorganic fiber mat 31 to a location below the cutting edges 13a so that the inorganic fiber mat 31 is easily separated from the punching die 11. The foam layer 17 is fixed to the processing surface 12a by a double-sided tape or an adhesive.

Preferable materials for the inorganic fiber mat 31 include inorganic fibers, such as silica fibers, alumina fibers, and silica-alumina fibers. The inorganic fiber mat 31 is obtained by forming a sheet of inorganic fibers. The inorganic fiber mat 31 may be obtained by cutting a rolled mat of inorganic fibers to a predetermined length. The thickness of the inorganic fiber mat 31 may be, for example, about 5 to about 10 mm. It is preferred that the inorganic fiber mat 31 be needle-punched. A seal member 34 cut out of a needle-punched inorganic fiber mat 31 has a reduced thickness and exhibits satisfactory seal performance. The inorganic fiber mat 31 may be impregnated with a binder resin so that a seal member 34 would have reduced thickness and exhibit satisfactory seal performance. Further, the binder resin prevents inorganic fibers from falling off from the inorganic fiber mat 31 or from the seal member 34.

As shown in Fig. 4, the inorganic fiber mat 31 is punched by the first blade 14 and divided into the seal member formation portion 32 and the frame-shaped unnecessary portion 33. The seal member formation portion 32 is punched by the third blades 16 and divided into the seal members 34.

The second blades 15 cut the frame-shaped unnecessary portion 33 to form perforations for dividing the frame-shaped unnecessary portion 33 into the unnecessary fragments 33a. The unnecessary fragments 33a can easily be separated from one another at the perforations. However, the unnecessary portion 33 still has a frame-shape when punched out. Accordingly, the punched out inorganic fiber mat 31 may be transported in a state in which the weakly connected unnecessary fragments 33a surround the seal member 34. Referring to Fig. 4, the perforations are torn to separate the four unnecessary fragments 33a. The separated unnecessary fragments 33a can be removed by moving them aside from the seal member formation portion 32 on the workbench. The removed unnecessary fragments 33a are then collected.

After the unnecessary fragments 33a are removed, only the seal members 34 remain on the workbench. Thus, the seal members 34 can be readily collected. The collected seal members 34 are placed in a transportation container and transported for assembly of an exhaust gas purification apparatus.

Fig. 5A shows one example of a seal member 34. The seal member 34 is rectangular and includes a tab 34a and a recess or socket 34b. When the seal member 34 is wound around an exhaust gas purifier, the tab 34a is fitted in the socket 34b.

An exhaust gas purification apparatus 41 will now be described with reference to Fig. 5B. The exhaust gas purification apparatus 41 includes a filter member 42, which functions as an exhaust gas purifier, a casing 43, and a seal member 34. The seal member 34 is arranged between the filter member 42 and the casing 43, which accommodates the filter member 42. In one example, the filter member 42 is a cylindrical honeycomb structure having a large number of cells. When the exhaust gas passes through the filter member 42, the particulate matter suspended in the exhaust gas is trapped by the inner walls of the cells. The filter member 42 may be made of a ceramic, such as silicon carbide, silicon nitride, cordierite, or mullite. The filter member 42 may be a catalyst carrier for carrying a catalyst.

The casing 43 is a cylinder having an inner diameter slightly larger than the outer diameter of the filter member 42. In one example, the casing 43 is made of metal.

The assembly of the exhaust gas purification apparatus 41 will now be described. First, the seal member 34 is wound around the filter member 42. The tab 34a is fitted into the socket 34b. Thus, the seal member 34 is wound around the entire circumference of the filter member 42 without its ends overlapping each other.

The filter member 42 around which the seal member 34 is wound is pressed into the casing 43. The seal member 34 is elastically compressed. The repulsive force of the seal member 34 fixes the filter member 42 in the casing 43. The seal member 34 functions as a protective cushion for preventing the filter member 42 from hitting the casing 43 due to vibrations transmitted from the outer side.

As shown in Fig. 6, a coupler 44 is connected to each of the two open ends of the casing 43 in the exhaust gas purification apparatus 41, for example, through welding. The coupler 44 on one end of the casing 43 is connected to a first exhaust pipe 45, which is further connected to a vehicle engine. The coupler 44 on the other end of the casing 43 is connected to a second exhaust pipe 46, which is further connected to a muffler (not shown). Exhaust gas is emitted from the engine via the exhaust gas purification apparatus 41.

The seal member 34 seals the gap between the outer circumferential surface of the filter member 42 and the inner circumferential surface of the causing 43 to prevent exhaust gas from leaking out from between the outer circumferential surface of the filter member 42 and the inner circumferential surface of the casing 43.

The preferred embodiment has the advantages described below.
(1) The first blade 14 punches out the frame-shaped unnecessary portion 33. The second blades 15 form the perforations on the frame-shaped unnecessary portion 33 but do not separate the unnecessary portion 33 into the unnecessary fragments 33a. Thus, the unnecessary portion 33 remains frame-shaped. Accordingly, when the punched inorganic fiber mat 31 is transported, the seal members 34 are transported in a state surrounded by the unnecessary portion 33. Further, after transporting the punched inorganic fiber mat 31 to the workbench in order to collect the seal members 34, the unnecessary portion 33 is still frame-shaped. This prevents the unnecessary fragments 33a from mixing with the seal members 34. Thus, the perforations of the frame-shaped unnecessary portion 33 may be torn to separate the unnecessary fragments 33a from each other and smoothly remove the unnecessary fragments 33a from the seal members 34. In this manner, the unnecessary portion 33 and the seal members 34 do not become scattered. Thus, the unnecessary fragments 33a and the seal members 34 do not have to be separately sorted out, and the unnecessary portion 33 may be removed smoothly. This improves efficiency for removing the unnecessary portion 33. The blades 13, which include the second blades 15, are received in the mounting grooves 12b. The mounting of the blades 13 is simple and thus does not complicate the manufacturing of the punching die 11.
(2) It is preferred that the notch 15a of each second blade 15 have a width W of about one to about eight millimeters. In this case, the second blades 15 form perforations having an appropriate strength. Therefore, during transportation of the punched inorganic fiber mat 31, the frame-shaped unnecessary portion 33 is not torn apart at the perforations. Further, after transporting the punched inorganic fiber mat 31, the frame-shaped unnecessary portion 33 may be separated into the fragments 33a at the perforations.
(3) The second blades 15, which are spaced from one another, form the perforations enabling the frame-shaped unnecessary portion 33 to be separated into the unnecessary fragments 33a. In comparison with the unnecessary portion 33, the relatively small unnecessary fragments 33a are less apt to clinging to the seal members 34. This facilitates removal of the unnecessary fragments 33a. Further, when removing the unnecessary fragments 33a, burrs do not form on the seal members 34.
(4) The cutting edge of the first blade 14, which extends in the shape of a rectangular loop, cuts out the rectangular frame-shaped unnecessary portion 33. The cutting edges of the second blades 15 extend outward from the corners of the first blade 14 and form perforations to separate the rectangular frame-shaped unnecessary portion 33 into the thin and elongated unnecessary fragments 33a. The unnecessary fragments 33a, which are torn apart at the perforation, are outwardly moved away from the seal member formation portion 32 and easily removed from the seal member formation portion 32. The rectangular frame-shaped unnecessary portion 33 is separated into the linear unnecessary fragments 33a. Thus, arrangement of the removed unnecessary fragments 33a in a parallel state at a temporary collection spot reduces space occupied by the removed unnecessary fragments 33a.
(5) The third blades 16 that separate the seal member formation portion 32 into the plurality of seal members 34 are arranged at the inner side the first blade 14. A single punching operation forms the seal members 34 from the single inorganic fiber mat 31. This improves operation efficiency for removing the unnecessary portion 33 and increases the productivity of the seal members 34.
(6) The punching die 11 manufactures the seal members 34 from the inorganic fiber mat 31 with high productivity.
(7) When the inorganic fiber mat 31 is cut out of a rolled inorganic fiber mat or a long inorganic fiber mat, the end surfaces of the roll or the cut surfaces of the long inorganic fiber mat become the outer end 31a of the inorganic fiber mat 31. In this case, the outer end 31a of the inorganic fiber mat 31 may have an uneven thickness. Accordingly, the first blade 14 punches out the frame-shaped unnecessary portion 33 including the outer end 31a and shapes the inorganic fiber mat 31.

The second blades 15 form the perforations for partially separating the frame-shaped unnecessary portion 33 into the unnecessary fragments 33a. After transporting the inorganic fiber mat 31, the frame-shaped unnecessary portion 33 is torn up into the unnecessary fragments 33a at the perforations (uncut connection parts). Thus, the cut surfaces of the seal member formation portion 32 (end surfaces of the seal members 34) will not have burrs when the unnecessary fragments 33a are separated from the seal member formation portion 32. This results in seal members 34 with high-quality, uniform thickness, and uniform shape.

It should be apparent to those skilled in the art that the present invention may be embodied in many other specific forms without departing from the scope of the claims . Particularly, it should be understood that the present invention may be embodied in the following forms.

The notch 15a of each second blade 15 may be in any quantity. Thus, each second blade 15 may have one or more notches 15a.

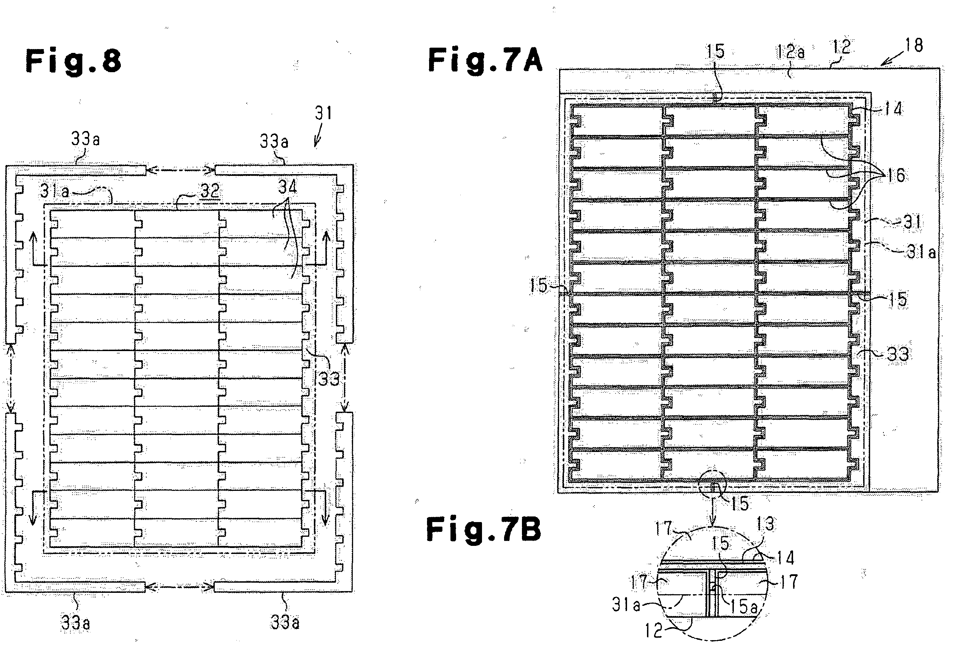

The positions of the second blades 15 may be changed. As shown in Figs. 7A and 7B, a punching die 18 may include a plurality of second blades 15, which extend outward from the rectangular loop-shaped first blade 14 at locations other than the four corners. As shown in Fig. 8, an unnecessary portion 33 of an inorganic fiber mat 31, which is punched using the punching die 18, is separated into four L-shaped unnecessary fragments 33a.

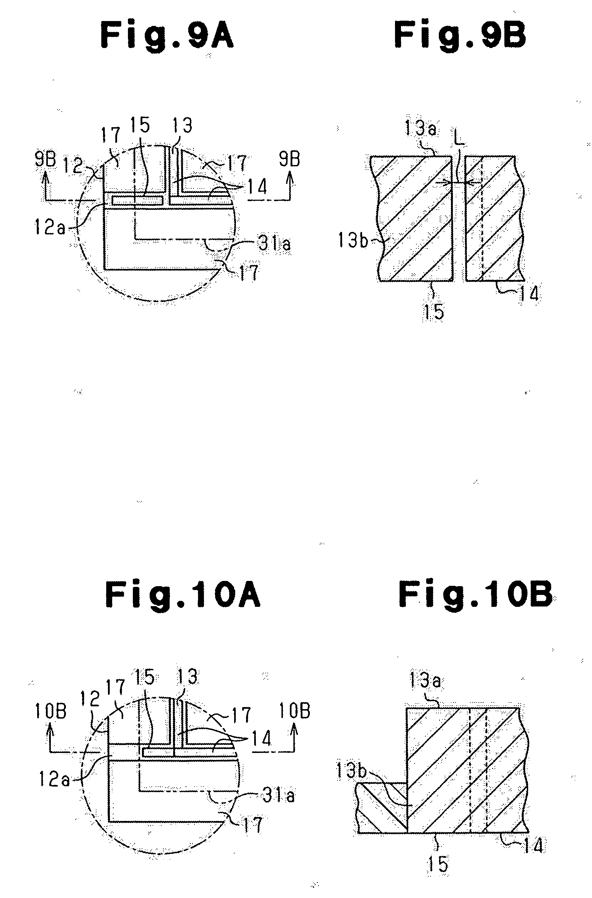

The notches 15a of the second blades 15 may be eliminated. In the example shown in Figs. 9A and 9B, each second blade 15 has a continuous cutting edge and is spaced from the first blade 14. Thus, a gap, which defines a portion that does not include a blade, is formed between the second blade 15 and the first blade 14. The second blade 15 partially punches out the frame-shaped unnecessary portion 33 to form a perforation connected to the outer end of the frame-shaped unnecessary portion 33. An uncut connection part is formed on the inner edge (inner contour) of the unnecessary portion 33. In this case, the same advantages as the previously described preferred embodiment are obtained.

It is preferred that the distance L between the first. blade 14 and each second blade 15 be about one to about eight millimeters. This width range provides sufficient strength for maintaining the shape of the frame-shaped unnecessary portion 33, while forming perforations for enabling easy separation of the unnecessary fragments 33a from the unnecessary portion 33.

The notches 15a of the second blades 15 may be eliminated. In the example shown in Figs. 10A and 10B, each relatively short second blade 15, which has a continuous cutting edge, extends outward from the first blade 14. The second blade 15 has an outer end located inward from the outer end 31a of the inorganic fiber mat 31. The second blade 15 partially punches out the frame-shaped unnecessary portion 33 to form a perforation connected to the inner edge of the frame-shaped unnecessary portion 33. An uncut connection part is formed on the outer end of the unnecessary portion 33. In this case, the same advantages as the previously described preferred embodiment are obtained.

The first blade 14 may be arranged to form a closed loop other than a rectangular loop. For example, the first blade 14 may be arranged to form a hexagonal loop. However, when the inorganic fiber mat 31 is rectangular, the number of seal members 34 cut out of the inorganic fiber mat 31 can be maximized, and the unnecessary portion 33 may be minimized. Accordingly, it is preferred that the first blade 14 be arranged to form a rectangular frame.

The inorganic fiber mat 31 does not have to be rectangular and may have other shapes. For example, the inorganic fiber mat 31 may be hexagonal.

The base plate 12 does not have to be rectangular and may have any other shape in accordance with the shape of the inorganic fiber mat 31. For example, the base plate 12 may be hexagonal.

The quantity of the second blades 15 may be only one Alternatively, the quantity of the second blades 15 may be three or less or five or more.

The size and the shape of the seal member 34 differ depending on the size and the shape of the filter member 42. Thus, the arrangement of the third blades 16 may be changed in accordance with the size and shape of the filter member 42.

The seal member 34 does not have to include the tab 34a and the socket 34b.

The punching die 11 does not have to include the foam layer 17.

The present examples and embodiments are to be considered as illustrative and not restrictive, and the invention is not to be limited to the details given herein, but may be modified within the scope and equivalence of the appended claims.

## Claims

1. A method of manufacturing seal members (34) from a sheet of an inorganic fiber mat (31) having a contour, the method comprising the following steps :
providing a punching die (11) having a first blade (14) supported on a base plate (12), the first blade (14) having a cutting edge (13a) extending to form a loop, the punching die also having at least one second blade (15) supported on the base plate (12) at an outer side of the first blade (14), wherein the punching die (11) further includes at least one third blade (16), supported on the base plate at an inner side of the first blade (11), for punching and separating the seal member formation portion (32) into a plurality of seal members;
punching the inorganic fiber mat with the punching die (11) by using the first blade (14) and the third blade (16) to punch out a frame-shaped unnecessary portion, which includes the contour of the inorganic fiber mat (31) and a seal member formation portion (32), which includes a plurality of seal members (34), from the inorganic fiber mat (31), and using the at least one second blade (15) to partially cut the frame-shaped unnecessary portion (33) and form perforations in the frame-shaped unnecessary portion (33) for dividing the unnecessary portion into a plurality of weakly connected unnecessary fragments;
after punching, transporting the inorganic fiber mat in a state in which the plurality of weakly connected unnecessary fragments surround the seal member formation portion (32);
tearing the frame-shaped unnecessary portion (33) into a plurality of unnecessary fragments at the perforations that are formed by the at least one second blade; and
removing the unnecessary fragments from the seal member formation portion (32).

2. The method according to claim 1, wherein the at least one second blade (15) has a non-continuous cutting edge including an edgeless portion.

3. The method according to claim 2, wherein the edgeless portion is a notch.

4. The method according to claim 2, wherein the notch has a width of about one to about eight millimeters.

5. The method according to claim 2, wherein the edgeless portion does not cut the frame-shaped unnecessary portion (33).

6. The method according to claim 1, wherein the at least one second blade (15) is one of a plurality of spaced second blades for forming a plurality of perforations in the frame-shaped unnecessary portion (33).

7. The method according to claim 6, wherein the first blade (14) has a cutting edge that extends to form a rectangular frame having four corners, and the at least one second blade (15) includes four second blades (15) respectively extending outward from the four corners of the first blade (14).

8. The method according to claim 1, wherein the second blade (15) and the first blade (14) forms a gap therebetween.

9. The method according to claim 8, wherein the second blade (15) and the first blade (14) are spaced from each other by about one to about eight millimeters.

10. The method according to claim 8, wherein the at least one second blade (15) includes a plurality of spaced second blades for forming a plurality of perforations in the frame-shaped unnecessary portion (33).

11. The method according to claim 10, wherein the first blade (14) has a cutting edge that extends to form a rectangular frame having four corners, and the at least one second blade (15) includes four second blades (15) respectively arranged near the four corners of the first blade.

12. The method according to claim 1, wherein the second blade (15) is arranged inward from the contour of the inorganic fiber mat (31).

13. The method according to claim 12, wherein the inorganic fiber (31) mat includes an inner edge, and the second blade (15) form a perforation connected to the inner edge.

14. The method according to claim 13, wherein the at least one second blade (15) includes a plurality of spaced second blades (15) for forming a plurality of perforations in the frame-shaped unnecessary portion (33).

15. The method according to claim 14, wherein the first blade (14) has a cutting edge that extends to form a rectangular frame having four corners, and the at least one second blade (15) includes four second blades respectively arranged near the four corners of the first blade (14).

16. The method according to any one of claims 1 to 15, wherein each blade is made of carbon steel.

## Patentansprüche

1. Herstellungsverfahren eines Dichtungselements (24) aus einem Blatt einer Matte aus anorganischen Fasern (31), die eine Kontur aufweist, wobei das Verfahren die folgenden Schritte umfasst:
Bereitstellen einer Stanzform (11), die eine erste Klinge (14) aufweist, die auf einer Basisplatte (12) unterstützt ist, wobei die erste Klinge (14) eine Schneidkante (13a) aufweist, die sich erstreckt, um eine Schlaufe auszubilden, wobei die Stanzform ferner wenigstens eine zweite Klinge (15) aufweist, die auf der Basisplatte (12) an einer äußeren Seite der ersten Klinge (14) unterstützt ist, bei dem die Stanzform (11) ferner wenigstens eine dritte Klinge (16) enthält, die auf der Basisplatte an einer Innenseite der ersten Klinge (14) unterstützt ist, zum Stanzen und Trennen des Dichtungselements-Ausbildungsabschnitts (32) in einen Vielzahl von Dichtungselementen ;
Stanzen der Matte aus anorganischen Fasern mit der Stanzform (11) unter Verwendung der ersten Klinge (14) und der dritte Klinge (16), um einen rahmenförmigen überflüssigen Abschnitt, der die Kontur der Matte aus anorganischen Fasern (31) enthält, und einen Dichtungselement-Ausbildungsabschnitt (32), der eine Vielzahl von Dichtungselementen (34) enthält, aus der Matte aus anorganischen Fasern (31) auszustanzen, und Verwenden der wenigstens einen zweiten Klinge (15), um den rahmenförmigen überflüssigen Abschnitt (33) teilweise zu schneiden und Perforationen in dem rahmenförmigen überflüssigen Abschnitt (33) zum Unterteilen des überflüssigen Abschnitts in eine Vielzahl von schwach verbundenen überflüssigen Fragmenten auszubilden;
nach dem Stanzen, Transportieren der Matte aus anorganischen Fasern in einem Zustand, in dem die Vielzahl von schwach verbundenen überflüssigen Fragmenten den Dichtungselement-Ausbildungsabschnitt (32) umgeben;
Zerreißen des rahmenförmigen überflüssigen Abschnitts (33) in eine Vielzahl von überflüssigen Fragmenten an den Perforationen, die mittels der wenigstens einen zweiten Klinge ausgebildet werden; und
Entfernen der überflüssigen Fragmente von dem Dichtungselement-Ausbildungsabschnitt (32).

2. Verfahren nach Anspruch 1, bei dem die wenigstens zweite Klinge (15) eine nicht-kontinuierliche Schneidkante aufweist, die einen kantenlosen Abschnitt enthält.

3. Verfahren nach Anspruch 2, bei dem der kantenlose Abschnitt eine Kerbe ist.

4. Verfahren nach Anspruch 2, bei dem die Kerbe eine Breite von ungefähr einem bis ungefähr acht Millimeter aufweist.

5. Verfahren nach Anspruch 2, bei dem der kantenlose Abschnitt den rahmenförmigen überflüssigen Abschnitt (33) nicht schneidet.

6. Verfahren nach Anspruch 1, bei dem die wenigstens eine zweite Klinge (15) eine aus einer Vielzahl von beabstandeten zweiten Klinge zum Ausbilden einer Vielzahl von Perforationen in dem rahmenförmigen überflüssigen Abschnitt (33) ist.

7. Verfahren nach Anspruch 6, bei dem die erste Klinge (14) eine Schneidkante aufweist, die sich erstreckt, um einen rechteckförmigen Rahmen auszubilden, der vier Ecken aufweist, und die wenigstens eine zweite Klinge (15) vier zweite Klingen (15) enthält, die sich von den vier Ecken der ersten Klinge (14) entsprechend nach außen erstrecken.

8. Verfahren nach Anspruch 1, bei dem die zweite Klinge (15) und die erste Klinge (14) eine Lücke dazwischen ausbilden.

9. Verfahren nach Anspruch 8, bei dem die zweite Klinge (15) und die erste Klinge (14) ungefähr ein bis ungefähr acht Millimeter voneinander beabstandet sind.

10. Verfahren nach Anspruch 8, bei dem die wenigstens eine zweite Klinge (15) eine Vielzahl von beabstandeten zweiten Klingen zum Ausbilden einer Vielzahl von Perforationen in dem rahmenförmigen überflüssigen Abschnitt (33) enthält.

11. Verfahren nach Anspruch 10, bei dem die erste Klinge (14) eine Schneidkante aufweist, die sich erstreckt, um einen rechteckförmigen Rahmen auszubilden, der vier Ecken aufweist, und die wenigstens eine zweite Klinge (15) vier zweite Klingen (15) enthält, die entsprechend in der Nähe der vier Ecken der ersten Klinge angeordnet sind.

12. Verfahren nach Anspruch 1, bei dem die zweite Klinge (15) von der Kontur der Matte aus anorganischen Fasern (31) nach innen angeordnet ist.

13. Verfahren nach Anspruch 12, bei dem die Matte aus anorganischen Fasern (31) eine Innenkante enthält und die zweite Klinge (15) eine Perforation ausbildet, die mit der Innenkante verbunden ist.

14. Verfahren nach Anspruch 13, bei dem die wenigstens eine zweite Klinge (15) eine Vielzahl von beabstandeten zweiten Klingen (15) zum Ausbilden einer Vielzahl von Perforationen in dem rahmenförmigen überflüssigen Abschnitt (33) enthält.

15. Verfahren nach Anspruch 14, bei dem die erste Klinge (14) eine Schneidkante aufweist, die sich erstreckt, um einen rechteckförmigen Rahmen auszubilden, der vier Ecken aufweist, und die wenigstens zweite Klinge (15) vier zweite Klingen enthält, die entsprechend in der Nähe der vier Ecken der ersten Klinge (14) angeordnet sind.

16. Verfahren nach einem der Ansprüche 1 bis 15, bei dem jede Klinge aus Kohlenstoffstahl ausgebildet ist.

## Revendications

1. Procédé de fabrication de joints d'étanchéité (14) à partir d'une feuille d'un mat de fibres inorganiques (31) ayant un contour, le procédé comprenant les étapes suivantes :
fournir une matrice de poinçonnage (11) ayant une première lame (14) soutenue sur une plaque de base (12), la première lame (14) ayant un bord de coupe (13a) s'étendant pour former une boucle, la matrice de poinçonnage ayant également au moins une deuxième lame (15) soutenue sur la plaque de base (12) à un côté extérieur de la première lame (14), où la matrice de poinçonnage (11) inclut en plus au moins une troisième lame (16), soutenue sur la plaque de base à un côté intérieur de la première lame (11), pour poinçonner et séparer la portion de formation (32) du joint d'étanchéité en une pluralité de joints d'étanchéité ;
poinçonner le mat de fibres inorganiques avec la matrice de poinçonnage (11) en utilisant la première lame (14) et la troisième lame (16) pour découper une portion inutile en forme de cadre, qui inclut le contour du mat de fibres inorganiques (31), et une portion de formation (32) de joint d'étanchéité, qui inclut une pluralité de joints d'étanchéité (34), à partir du mat de fibres inorganiques (11), et en utilisant la au moins une deuxième lame (15) pour couper en partie la portion inutile en forme de cadre (33) et pour former des perforations dans la portion inutile en forme de cadre (33) afin de diviser la portion inutile en une pluralité de fragments qui ne sont pas nécessaires faiblement reliés;
après poinçonnage, transporter le mat de fibres inorganiques dans un état où la pluralité de fragments qui ne sont pas nécessaires faiblement reliés entourent la portion de formation de joint d'étanchéité (32) ;
déchirer la portion inutile en forme de cadre (33) en une pluralité de fragments qui ne sont pas nécessaires au niveau des perforations qui sont formées par la au moins une deuxième lame ; et
enlever les fragments qui ne sont pas nécessaires de la portion de formation de joint d'étanchéité (32).

2. Procédé selon la revendication 1, dans lequel la au moins une deuxième lame (15) a un bord de découpe non continu incluant une portion sans bord.

3. Procédé selon la revendication 2, dans lequel la portion sans bord est une encoche.

4. Procédé selon la revendication 2, dans lequel l'encoche a une largeur d'environ un à environ huit millimètres.

5. Procédé selon la revendication 2, dans lequel la portion sans bord ne coupe pas la portion inutile en forme de cadre (33).

6. Procédé selon la revendication 1, dans lequel la au moins une deuxième lame (15) est l'une d'une pluralité de deuxièmes lames espacées pour former une pluralité de perforations dans la portion inutile en forme de cadre (33).

7. Procédé selon la revendication 6, dans lequel la première lame (14) a un bord de coupe qui s'étend pour former un cadre rectangulaire ayant quatre coins, et la au moins une deuxième lame (15) inclut quatre deuxièmes lames (15) s'étendant respectivement vers l'extérieur à partir des quatre coins de la première lame (14).

8. Procédé selon la revendication 1, dans lequel la deuxième lame (15) et la première lame (14) forment un jeu entre elles.

9. Procédé selon la revendication 8, dans lequel la deuxième lame (15) et la première lame (14) sont espacées l'une de l'autre par environ un à environ huit millimètres.

10. Procédé selon la revendication 8, dans lequel la au moins une deuxième lame (15) inclut une pluralité de deuxièmes lames espacées pour former une pluralité de perforations dans la portion inutile en forme de cadre (13).

11. Procédé selon la revendication 10, dans lequel la première lame (14) a un bord de coupe qui s'étend pour former un cadre rectangulaire ayant quatre coins, et la au moins une deuxième lame (15) inclut quatre deuxièmes lames (15) agencées respectivement à proximité des quatre coins de la première lame.

12. Procédé selon la revendication 1, dans lequel la deuxième lame (15) est agencée vers l'intérieur à partir du contour du mat de fibres inorganiques (31).

13. Procédé selon la revendication 12, dans lequel le mat de fibres inorganiques (31) inclut un bord intérieur, et la deuxième lame (15) forme une perforation reliée au bord intérieur.

14. Procédé selon la revendication 13, dans lequel la au moins une deuxième lame (15) inclut une pluralité de deuxièmes lames espacées (15) pour former une pluralité de perforations dans la portion inutile en forme de cadre (33).

15. Procédé selon la revendication 14, dans lequel la première lame (14) a un bord de coupe qui s'étend pour former un cadre rectangulaire ayant quatre coins, et la au moins une deuxième lame (15) inclut quatre deuxièmes lames agencées respectivement à proximité des quatre coins de la première lame (14).

16. Procédé selon l'une quelconque des revendications 1 à 15, dans lequel chaque lame est réalisée en acier au carbone.
